# EUROPEAN PATENT APPLICATION

(11) **EP 4 517 087 A1**
(43) Date of publication of application: **05.03.2025**
(21) Application number: 24196299.2
(22) Date of filing: 23.08.2024
(51) Int. Cl.: F04B 1/124, F04B 1/143, F04B 1/2035, F04B 53/02, F04B 53/14, F04B 53/16

(54) **PISTON RINGS AND BARREL SLEEVES**

(30) Priority: 28.08.2023 US 202318238774
(71) Applicant: Hamilton Sundstrand Corporation, Charlotte, NC 28217-4578 (US)
(72) Inventor: JARMAN, Jecee, Pueblo (US); LEDUC, Zachary Allen Ray, Granby (US); SHOEMAKER, Mark W., Pecatonica (US)
(74) Representative: Dehns

(57) **Abstract**

A pump assembly (100) includes a cylinder block (102) defining a piston bore (104) therein extending in an axial direction. A sleeve (106) lines the piston bore (104). A piston (108) is included in the piston bore (104), configured to reciprocate along a stroke in the axial direction within the sleeve (106). A piston ring (110) is engaged circumferentially about the piston. The piston ring (110) is fixed to the piston (108) and is slidingly engaged to an inner surface (112) of the sleeve (106).

## Description

### TECHNICAL FIELD

The present disclosure relates to pumps, and more particularly to positive displacement piston pumps such as for aerospace applications.

### BACKGROUND

Certain traditional positive displacement piston pumps have cylinder barrels made of Tungsten Carbide, and the wearing portion of the piston contacting the cylinder barrels are made of tool steel. These materials were chosen to provide wear resistance within the piston housing of the cylinder barrel. However, Tungsten carbide is a dense, heavy material especially in the aerospace context.

The conventional techniques have been considered satisfactory for their intended purpose. However, there is an ongoing need for improvements in pumps, e.g., for use aboard aircraft. This disclosure provides a solution for this need.

### SUMMARY

In accordance with an aspect, there is provided a pump assembly that includes a cylinder block defining a piston bore therein extending in an axial direction. A sleeve lines the piston bore. A piston is included in the piston bore, configured to reciprocate along a stroke in the axial direction within the sleeve. A piston ring is engaged circumferentially about the piston. The piston ring is fixed to the piston and is slidingly engaged to an inner surface of the sleeve.

The sleeve can define an inner stroking surface where the piston ring engages the sleeve throughout the stroke of the piston. The inner stroking surface can be free of steps in diameter. The piston does not need to contact the sleeve because it can be spaced apart from the sleeve by the piston ring.

The cylinder block can be of a first material. The sleeve can be of a second material different from the first material. The piston ring can be of a different material from the piston. The piston ring can be of a different material from the sleeve. At least one of the sleeves and the piston ring can be of a ceramic material. One of the sleeves and the piston ring can be of a metallic material. The sleeve can be of the ceramic material and the piston ring can be of the metallic material. The sleeve can be of the metallic material and the piston ring can be of the ceramic material. The ceramic material can be partially stabilized zirconia (PSZ). The PSZ can include yttria-stabilized zirconia YSZ. The ceramic material can be silicon nitride (Si₃N₄). The metallic material can be tool steel.

In accordance with an aspect, there is provided a pump assembly that includes a cylinder block defining a plurality of piston bores therein each extending in an axial direction. A respective sleeve lines each of the plurality of piston bores. A respective piston in each of the plurality of piston bores is configured to reciprocate in the axial direction within the sleeve. A respective piston ring is engaged circumferentially about each respective piston. The respective piston ring is fixed to the respective piston and is slidingly engaged to an inner surface of the respective sleeve.

A bent-axis actuator can include a plate and main shaft that are angled relative to the cylinder block and piston bores. The plate and main shaft can be configured to rotate around a separate axis from the cylinder block. The plate can be operatively connected to actuation ends of all the respective pistons for positive displacement pumping in the plurality of piston bores A port plate can be engaged to an inlet/outlet side of the cylinder block with an outlet port in fluid communication with a first subset of the plurality of the piston bores, and an inlet port in fluid communication with a second subset of the plurality of the outlet bores.

Each respective piston ring can be of a different material from the respective sleeve. At least one of the respective sleeves and the respective piston ring can be of a ceramic material. One of the respective sleeves and the respective piston ring can be of a metallic material.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic perspective view of an embodiment of a pump assembly constructed in accordance with the present disclosure, showing the pistons and cylinder block;
Fig. 2 is a schematic cross-sectional elevation view of the pump assembly of Fig. 1, showing one of the pistons engaged it is sleeve;
Figs. 3-4 are perspective views of the cylinder block of Figs. 1-2, viewed from above and below respectively, relative to the orientation in Fig. 2, where Fig. 3 shows the port plate exploded away from the cylinder block; and
Fig. 5 is a perspective view of a piston ring of the pistons of Fig. 1.

### DETAILED DESCRIPTION OF THE PREFERRED EMBODIMENTS

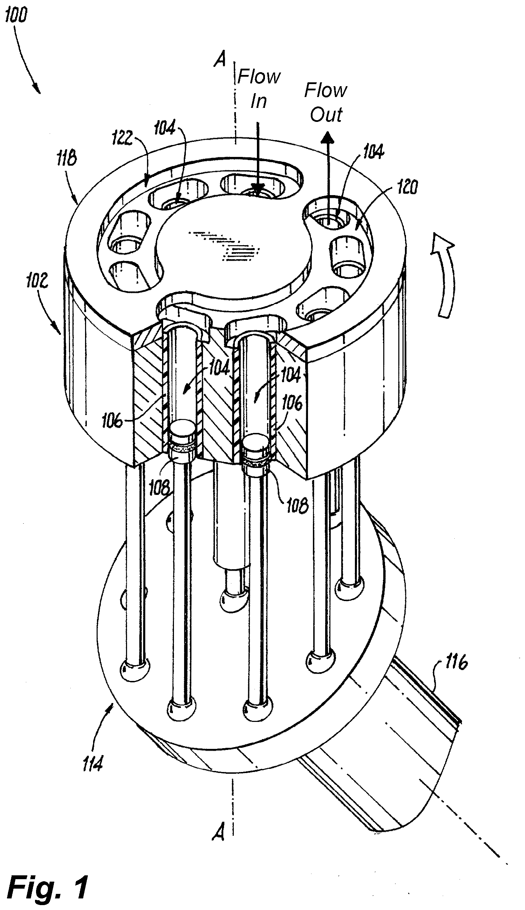

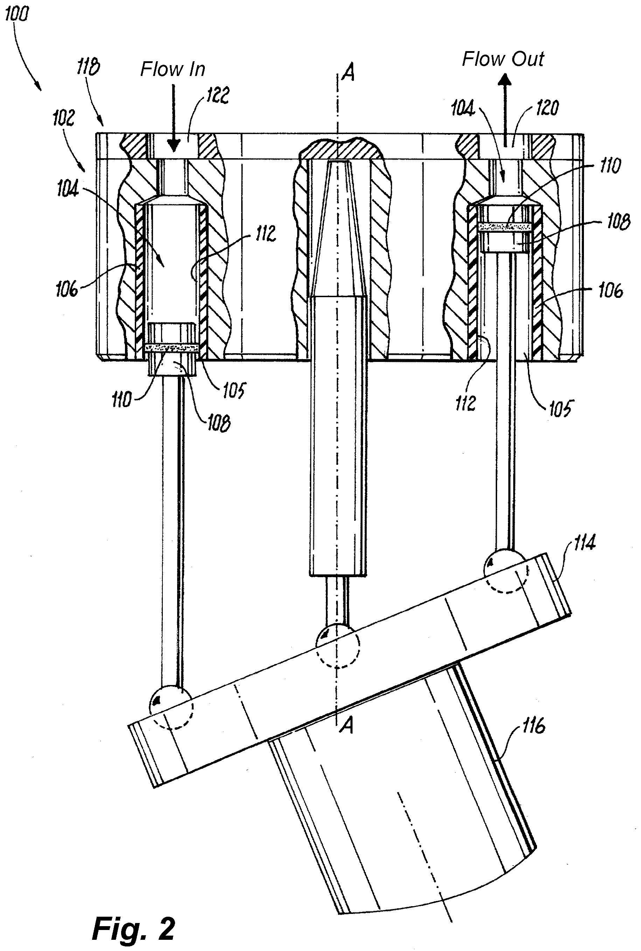

Reference will now be made to the drawings wherein like reference numerals identify similar structural features or aspects of the subject disclosure. For purposes of explanation and illustration, and not limitation, a partial view of an embodiment of a pump assembly in accordance with the disclosure is shown in Fig. 1 and is designated generally by reference character 100. Other embodiments of systems in accordance with the disclosure, or aspects thereof, are provided in Figs. 2-5, as will be described. This disclosure provides for a variable displacement bent axis piston pump cylinder barrel, e.g., up to 2.5 inches (6.35 cm) tall with an outer diameter of up to 3.5 inches (8.89 cm), which can be machined out of one of various types of tool steel instead of a traditional WC. It is contemplated that the pumps as disclosed herein can operate at around 200 degrees Celsius while being lubricated by the fuel used in the pump. Cylinder sleeve inserts within the piston bores can be made of tool steel, various partially stabilized zirconias (PSZs), and/or silicon nitride (Si₃N₄) and mated to split piston rings, e.g., up to 0.8 inches (2.03 cm) in diameter, that can be made of Si3N₄, PSZs, and/or tool steel. Depending on the mated pair of lubricated materials used, this can provide improved, or similar, wear resistance to that of a traditional WC pump, while considerably reducing weight, which is an advantage for aerospace applications.

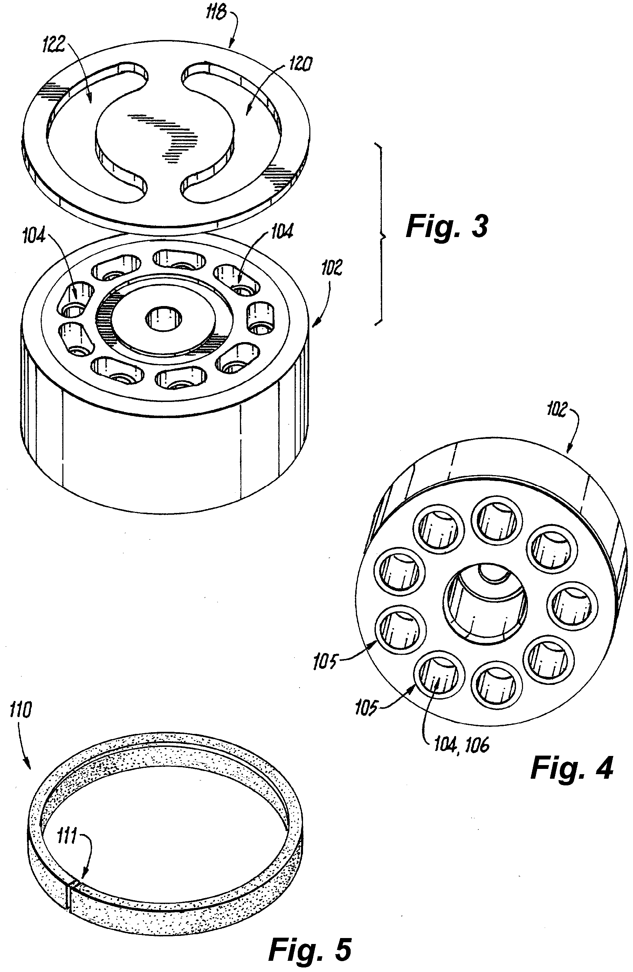

With referenced now to Fig. 1, the pump assembly 100 includes a cylinder barrel or block 102 defining a plurality of piston bores 104 therein extending in an axial direction, i.e., parallel to axis A. A respective sleeve 106 lines each of the piston bores 104. The sleeves 106 can be assembled into the cylinder block 102 by inserting them into the respective piston bores 104 from the bottom side as oriented in Fig. 1, so the sleeve presents an opening 105, labeled in Fig. 4, for receiving the pistons 108. On the opposite side of the cylinder block 102, the piston bores 104 can be of reduced diameter, preventing the sleeves from passing too far through the piston bores 104, where the reduced diameter openings are shown in Fig. 3. The cylinder block 102 is shown in Figs. 3-4 defining nine piston bores 104. However, positive displacement piston pumps can traditionally have anywhere from 7 to 13 piston bores, and those skilled in the art will readily appreciate that any suitable number of piston bores 104 can be included without departing from the scope of this disclosure.

With reference now to Fig. 2, a piston 108 is included each the piston bore 104, configured to reciprocate along a stroke in the axial direction within the respective sleeve 106. A respective piston ring 110, shown and labeled in Figs. 2 and 5, is engaged circumferentially about each of the pistons 108. Each piston ring 110 is fixed to its piston 108 and is slidingly engaged to an inner surface 112 (labeled in Fig. 2) of the respective sleeve 106. Each of the sleeves 106 defines an inner stroking surface 112 where the piston ring 110 engages the sleeve 106 throughout the stroke of the piston 108, wherein the inner stroking surface 112 is free of steps in diameter. In each of the piston bores 104, the piston 108 does not contact the sleeve 106 because it is spaced apart from the sleeve 106 by the piston ring 110, which has a split 111 (labeled in Fig. 5) for facilitating assembly onto a piston 108.

With reference again to Fig. 1, a bent-axis actuator includes a plate 114 that is angled obliquely relative to a main shaft 116. The main shaft 116 drives rotation of the cylinder block 102 and of the plate 114. Since the plate 114 is operatively connected to actuation ends of all the respective pistons 108, and since the cylinder block 102 and pistons 108 are aligned along a different axis from the main shaft 116 and plate 114, the rotation of the shaft 116 drives the reciprocating, positive displacement pumping in the plurality of piston bores 104.

A port plate 118, also shown in Fig. 3, is engaged to an inlet/outlet side of the cylinder block 102, on an opposite side of the cylinder block 102 from the plate 113. The port plate 118 includes an outlet port 120 in fluid communication with a first subset of the plurality of the piston bores 104, e.g., the piston bores 104 on the right as oriented in Fig. 1, and an inlet port 122 in fluid communication with a second subset of the plurality of the outlet bores 104, e.g., the piston bores 104 on the left in Fig. 1.

The cylinder block 102 can be made of a first material such as various tool steels, instead of the traditional tungsten carbide (WC). The sleeve 106 is of a second material with greater wear resistance in combination with the piston rings 110 than the first material, e.g. tool steel, of the cylinder block 102. Similarly, the piston ring 110 can be of the same or of a different material from the piston 108, wherein the piston ring 110 has more wear resistance in combination with the material of the sleeve 106 than does the piston 108 itself which is made of tool steel. The piston ring 110 can be of a similar or different material from the sleeve 106, but the combination of the materials of the piston ring 110 and the sleeve 106 provide an improved wear resistance while reducing the overall system weight.

At least one of the sleeves and the piston ring can be of a ceramic material, e.g. if both are ceramic, the materials can be Si₃N₄ and PSZ or Si₃N₄ and Si₃N₄, respectively. One of the sleeves 106 and the piston ring 110 can be of a metallic material such as tool steel, and the other can be of a ceramic material. For example, the sleeve 106 can be of the ceramic material and the piston ring 110 can be of the metallic material, or vice versa. The ceramic material can be a partially stabilized zirconia (PSZ), such as silicon nitride (Si₃N₄) or yttria-stabilized zirconia YSZ. YSZ is hexagonal in structure like graphite, so it can exhibit lubricious properties useful for wear resistance between the sleeves 106 and the piston rings 110.

The systems and methods as disclosed herein provide potential benefits including the following. Pump assemblies as disclosed herein are lighter (lower density) than WC/tool steel combinations to increase weight savings. Pairs between tool steel, Si3N₄, and PSZ's are more lubricious than WC/tool steel pairs and can wear 50+% better in SiSNVtool steel pairs than WC/tool steels pairs, among some pairings. PSZ ceramics wear similarly and can be applied via coating techniques to tool steel. As such, wear rates in either PSZ or Si₃N₄ configurations can increase service hours, while reducing overall pump weight.

The methods and systems of the present disclosure, as described above and shown in the drawings, provide for comparable wear resistance to that in the traditional WC pumps, while considerably reducing weight. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A pump assembly comprising:
a cylinder block defining a piston bore therein extending in an axial direction;
a sleeve lining the piston bore;
a piston in the piston bore, configured to reciprocate along a stroke in the axial direction within the sleeve; and
a piston ring engaged circumferentially about the piston, wherein the piston ring is fixed to the piston, and is slidingly engaged to an inner surface of the sleeve.

2. The pump assembly as recited in claim 1, wherein the piston does not contact the sleeve because it is spaced apart from the sleeve by the piston ring.

3. The pump assembly as recited in claim 1 or 2, wherein the cylinder block is of a first material, wherein the sleeve is of a second material different from the first material, and/or,
wherein the piston ring is of a different material from the piston, and/or
wherein the piston ring is of a different material from the sleeve.

4. The pump assembly as recited in any preceding claim, wherein at least one of the sleeves and the piston ring is of a ceramic material.

5. The pump assembly as recited in any preceding claim, wherein one of the sleeves and the piston ring is of a metallic material.

6. The pump assembly as recited in any preceding claim, wherein the sleeve is of the ceramic material and the piston ring is of the metallic material, or
wherein the sleeve is of the metallic material and the piston ring is of the ceramic material.

7. The pump assembly as recited in claim 4, wherein the ceramic material is partially stabilized zirconia (PSZ).

8. The pump assembly as recited in claim 7, wherein the PSZ includes yttria-stabilized zirconia YSZ.

9. The pump assembly as recited in any of claim 4, wherein the ceramic material is silicon nitride (Si₃N₄).

10. The pump assembly as recited in any of claim 5, wherein the metallic material is tool steel.

11. The pump assembly as recited in any preceding claim, wherein the sleeve defines an inner stroking surface where the piston ring engages the sleeve throughout the stroke of the piston, wherein the inner stroking surface is free of steps in diameter.

12. A pump assembly comprising:
a cylinder block defining a plurality of piston bores therein each extending in an axial direction;
a respective sleeve lining each of the plurality of piston bores;
a respective piston in each of the plurality of piston bores, configured to reciprocate in the axial direction within the sleeve; and
a respective piston ring engaged circumferentially about each respective piston, wherein the respective piston ring is fixed to the respective piston and is slidingly engaged to an inner surface of the respective sleeve.

13. The pump assembly as recited in claim 12, further comprising a bent-axis actuator including a plate and main shaft that are angled relative to the cylinder block and piston bores, wherein the plate and main shaft are configured to rotate around a separate axis from the cylinder block, wherein the plate is operatively connected to actuation ends of all the respective pistons for positive displacement pumping in the plurality of piston bores.

14. The pump assembly as recited in claim 13, further comprising a port plate engaged to an inlet/outlet side of the cylinder block with an outlet port in fluid communication with a first subset of the plurality of the piston bores, and an inlet port in fluid communication with a second subset of the plurality of the outlet bores.

15. The pump assembly as recited in any of claims 12 to 14, wherein each respective piston ring is of a different material from the respective sleeve, and/or
wherein at least one of the respective sleeves and the respective piston ring is of a ceramic material, and/or
wherein one of the respective sleeves and the respective piston ring is of a metallic material.
